# DEMANDE DE BREVET EUROPEEN

(11) **EP 1 325 854 A2**
(43) Date de publication de la demande: **09.07.2003**
(21) Numéro de dépôt: 02028927.8
(22) Date de dépôt: 23.12.2002
(51) Int. Cl.: B60T 13/58

(54) **Verin pneumatique pour le test d'un servomoteur**

(30) Priorité: 31.12.2001 FR 0117109
(71) Demandeur: ROBERT BOSCH GmbH, 70442 Stuttgart (DE)
(72) Inventeur: Lacroix, Stéphane, 77220 - Tournan en Brie (FR); Maligne, Jean-Charles, 93300 - Aubervilliers (FR)
(74) Mandataire: Hurwic, Aleksander Wiktor

(57) **Abrégé**

Vérin (10) pneumatique pour le test d'un servomoteur d'assistance de freinage de véhicule automobile, du type qui comporte un corps (12) sensiblement axial à l'intérieur duquel est monté coulissant un piston (14), du type dans lequel une première extrémité (16) du piston (14) délimite dans le corps (12) une chambre (18) de pression soumise à une pression (P) d'air déterminée, et du type dans lequel une deuxième extrémité (20) opposée du piston est liée à une tige (22) d'actionnement du servomoteur, caractérisé en ce que le vérin (10) comporte un clapet (24) pneumatique, commandé par la tige (22) d'actionnement du servomoteur, qui est susceptible, au delà d'une valeur déterminée de limite d'un effort de réaction du servomoteur s'exerçant sur la tige (22), de mettre en communication la chambre (18) de pression du vérin (10) avec le milieu extérieur (Me), pour réguler l'effort exercé par le piston (14) sur la tige (22) d'actionnement du servomoteur suivant une valeur constante.

## Description

L'invention concerne un vérin pneumatique pour le test d'un servomoteur d'assistance de freinage de véhicule automobile.

L'invention concerne plus particulièrement un vérin pneumatique pour le test d'un servomoteur d'assistance de freinage de véhicule automobile, du type qui comporte un corps sensiblement axial à l'intérieur à l'intérieur duquel est monté coulissant un piston, du type dans lequel une première extrémité du piston délimite dans le corps une chambre de pression soumise à une pression d'air déterminée, et du type dans lequel une deuxième extrémité opposée du piston est liée à une tige d'actionnement du servomoteur à tester.

On connaît de nombreux exemples de vérins pneumatiques de test de ce type.

Il s'agit pour la plupart de vérins à simple effet. A ce titre, l'effort qu'un tel vérin est susceptible d'exercer sur la tige d'actionnement du servomoteur à tester ne peut être régulé. Le test d'un servomoteur avec un tel vérin nécessite de procéder par incrémentations successives de la pression qui est admise dans le corps du vérin, et donc d'effectuer un grand nombre de mesures.

Pour remédier à cet inconvénient, on a proposé d'utiliser des vérins hydrauliques à double effet. Un tel vérin ne peut fonctionner que sous le contrôle d'un système de régulation de pression de ses chambres, ce qui rend son utilisation particulièrement onéreuse. Par ailleurs, l'utilisation d'une technologie de type hydraulique est sensiblement plus onéreuse et contraignante qu'une technologie de type pneumatique.

Pour remédier à ces inconvénients, l'invention propose un vérin de test à simple effet comportant des moyens de régulation de l'effort exercé sur la tige du servomoteur.

Dans ce but, l'invention propose un vérin de test du type décrit précédemment, caractérisé en ce que le vérin comporte un clapet pneumatique, commandé par la tige d'actionnement du servomoteur, qui est susceptible, au delà d'une valeur déterminée de limite d'un effort de réaction du servomoteur s'exerçant sur la tige du servomoteur, de mettre en communication la chambre de pression du vérin avec le milieu extérieur, pour réguler l'effort exercé par le piston sur la tige d'actionnement du servomoteur suivant une valeur constante.

Selon d'autres caractéristiques de l'invention :
- le clapet est intégré au piston.
- un premier alésage du piston débouche dans sa première extrémité, un second alésage du piston débouche dans une troisième extrémité du piston qui fait saillie hors du vérin dans le milieu extérieur, et le clapet est interposé entre les premier et second alésages.
- le clapet comporte au moins un siège fixe et un siège mobile, qui est susceptible d'être sollicité par la deuxième extrémité du piston et qui est rappelé élastiquement contre le siège par l'intermédiaire de moyens élastiques tarés selon la valeur déterminée de l'effort de réaction du servomoteur,
- les premier et second alésages, le clapet, et les extrémités du piston sont coaxiaux,
- le piston comporte un corps tubulaire qui reçoit :
   - une douille tubulaire, qui comporte le premier alésage,
   - un élément tubulaire intermédiaire, qui comporte le clapet, le second alésage et les deuxième et troisième extrémités,
- le siège fixe du clapet est porté par l'élément tubulaire intermédiaire et il est tourné vers le premier alésage,
- le second alésage, agencé dans l'élément tubulaire intermédiaire, est fermé par un bouchon comportant la troisième extrémité du piston,
- le bouchon comportant la troisième extrémité du piston comporte au moins un perçage axial destiné à guider en coulissement un poussoir d'actionnement du siège mobile dont l'extrémité libre, qui traverse le bouchon, forme la deuxième extrémité du piston,
- le bouchon comportant la troisième extrémité du piston comporte au moins un perçage excentré destiné à mettre en communication le second alésage avec le milieu extérieur,
- le premier alésage du piston est fermé par un bouchon comportant la première extrémité dont un perçage met en communication le premier alésage avec la chambre de pression et dont une collerette annulaire externe porte des moyens d'étanchéité du piston dans la chambre de pression.
- le premier alésage reçoit un ressort de compression, qui est interposé entre le bouchon comportant la première extrémité et le siège mobile du clapet, pour former les moyens élastiques de rappel du clapet.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe d'un vérin de test selon l'invention représenté en position de repos,
- la figure 2 est une vue en coupe du vérin de la figure 1 représenté en position d'actionnement de la tige du servomoteur, le clapet pneumatique étant fermé,
- la figure 3 est une vue en coupe du vérin de la figure 1 représenté en position d'actionnement de la tige du servomoteur, le clapet pneumatique étant ouvert.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

On a représenté sur les figures un vérin 10 pneumatique pour le test d'un servomoteur (non représenté) d'assistance de freinage de véhicule automobile.

De manière connue, le vérin 10 comporte un corps 12 sensiblement axial et tubulaire à l'intérieur duquel est monté coulissant un piston 14. Comme on le verra ultérieurement, le piston 14 est monté dans le corps 12 avec interposition de moyens d'étanchéité, notamment un joint arrière 13 et un joint avant qui sera décrit ultérieurement dans la présente description.

Une première extrémité 16 du piston délimite dans le corps tubulaire 12 une chambre 18 de pression qui est destinée à être soumise à une pression d'air déterminée. Une deuxième extrémité 20 du piston 14, opposée à la première extrémité 16 est destinée à être liée à une tige 22 d'actionnement du servomoteur à tester. Sur les figures, la tige 22 a été représentée en vue fantôme.

Conformément à l'invention, le vérin 10 comporte un clapet 24 pneumatique, commandé par la tige 22 d'actionnement du servomoteur, qui est susceptible, au delà d'une valeur déterminée de limite d'un effort de réaction du servomoteur s'exerçant sur la tige 22 du servomoteur, de mettre en communication la chambre de pression 18 du vérin 10 avec, le milieu extérieur "Me", pour réguler l'effort exercé par le piston 14 sur la tige 22 d'actionnement du servomoteur suivant une valeur constante.

Dans le mode de réalisation préféré de l'invention, le clapet 24 est intégré au piston 14. Cette disposition n'est pas limitative de l'invention, et le clapet 24 pourrait être extérieur au piston, voire être en partie extérieur au vérin. par exemple, le clapet pourrait être relié mécaniquement à la deuxième extrémité 20 ou bien à la tige d'actionnement 22 du servomoteur, et être relié pneumatiquement à la chambre de pression 18 pour la mettre en communication avec le milieu extérieur au delà d'une valeur déterminée de l'effort de réaction qui s'applique sur la tige 22 d'actionnement du servomoteur.

Dans le mode de réalisation préféré de l'invention, un premier alésage 26 agencé à l'avant du piston 14 débouche dans sa première extrémité 16, un second alésage 28 agencé à l'arrière du piston 14 débouche dans une troisième extrémité 30 du piston 14 qui fait saillie hors du vérin 10 dans le milieu extérieur "Me", et le clapet 24 est interposé dans le piston 14 entre les premier et second alésages 26, 28.

Plus particulièrement, le piston 14 comporte un corps tubulaire 32 qui reçoit une première douille avant tubulaire 34, qui comporte le premier alésage 26, et une seconde douille arrière tubulaire 36. Les douilles tubulaires avant 34 et arrière 36 sont vissées dans le corps tubulaire 32 par l'intermédiaire de moyens de filetage respectifs 38 et 40. Un joint d'étanchéité 35 est interposé entre la seconde douille 36 et le corps tubulaire 32.

La seconde douille arrière tubulaire 36 reçoit un élément 42 tubulaire intermédiaire, qui comporte le clapet 24, le second alésage 28 et les deuxième et troisième extrémités 20, 30.

Ainsi, les premier et second alésages 26, 28, le clapet 24, et les extrémités 16, 20, 30 du piston 14 sont coaxiaux.

Cette disposition n'est pas limitative de l'invention, et le clapet 24, le second alésage 28, et les deuxième et troisième extrémités 20, 30 pourraient être agencés directement dans le corps 32 du piston 14, ou bien être agencés directement dans la seconde douille arrière tubulaire 36. Ils pourraient aussi n'être pas coaxiaux.

Toutefois, la configuration qui a été évoquée précédemment constitue le mode de réalisation préféré de l'invention, car elle permet un démontage aisé des éléments internes du piston 14.

L'élément 42 tubulaire intermédiaire est par exemple fixé dans la seconde douille arrière tubulaire 36 par l'intermédiaire de moyens de vissage 44 tels que des filets formés à sa périphérie et dans la seconde douille arrière tubulaire 36. Un joint d'étanchéité 43 est interposé entre l'élément tubulaire intermédiaire et la seconde douille 36.

Le clapet 24 qui est agencé dans l'élément 42 tubulaire intermédiaire comporte au moins un siège fixe 46, qui est solidaire du piston 14 puisque l'élément 42 tubulaire intermédiaire et la seconde douille 36 sont liées rigidement au piston 14, et il comporte un siège mobile 48, qui, comme on le verra ultérieurement, est susceptible d'être sollicité par la deuxième extrémité 20 du piston, et qui est rappelé élastiquement contre le siège 46 par l'intermédiaire de moyens élastiques qui sont tarés selon la valeur déterminée de l'effort de réaction du servomoteur.

Dans le mode de réalisation préféré de l'invention, le siège fixe 46 est porté par une cloche 51 de forme sensiblement tronconique qui est fixée à l'élément tubulaire intermédiaire 42 par l'intermédiaire de vis 50 qui traversent une paroi de fond 52 de la seconde douille arrière tubulaire 36.

Plus particulièrement, la cloche 51 dans un alésage avant 64 complémentaire de l'élément tubulaire intermédiaire 42, qui est d'un diamètre correspondant au plus grand diamètre de la cloche 51. La cloche 51 comporte un perçage 54 axial dont le bord avant circulaire forme le siège fixe 46.

Avantageusement, la cloche 51 est donc démontable pour permettre d'adapter des sièges fixes 46 de différentes tailles.

Le siège mobile 48, est porté par la périphérie d'un élément tubulaire flottant 60 de forme sensiblement tronconique. Le siège 48 est donc sensiblement tronconique et il s'étend en arrière d'un paroi de fond 56 d'un alésage 58 de l'élément tubulaire flottant 60. Une portée cylindrique 62 de l'élément tubulaire flottant 60 est montée coulissante dans l'alésage 64 de l'élément tubulaire intermédiaire 42, et il est susceptible de venir en butée sur la périphérie tronconique de la cloche 51.

La paroi de fond 56 de l'élément tubulaire flottant 60 comporte un perçage 66 axial, agencé à la base du siège mobile 48, qui est destiné à permettre le passage de l'air de l'alésage avant 26 vers l'alésage arrière 28 au travers du clapet 24.

En arrière du siège fixe 46, La cloche 51 comporte une cavité 68 qui communique avec l'alésage arrière 28 par l'intermédiaire d'une rainure 70.

Le second alésage 26, agencé dans l'élément tubulaire intermédiaire, est fermé par un bouchon 72 qui comporte la troisième extrémité 30 du piston 14.

Plus particulièrement, le bouchon 72 comporte un tronçon tubulaire 74 avant qui est reçu dans l'élément tubulaire intermédiaire 42 et qui comporte le second alésage 26, et un tronçon arrière formant la troisième extrémité 30 du piston 14.

A son extrémité arrière formant la troisième extrémité 30 du piston 14, le bouchon 72 comporte au moins un perçage axial 76 qui est destiné à guider en coulissement un poussoir 78 d'actionnement du siège mobile 48 dont l'extrémité libre, qui traverse le bouchon 72, forme la deuxième extrémité 20 du piston 14.

D'autre part, le poussoir 78 comporte une face d'extrémité avant 80 qui est destinée à solliciter une face d'extrémité 82 du siège mobile 48 qui est agencée en regard du perçage axial 54 de la cloche 51.

A son extrémité arrière formant la deuxième extrémité 20, le poussoir 78 comporte un perçage taraudé 84 qui est destiné à recevoir la tige 22 d'actionnement du servomoteur.

Par ailleurs, le bouchon 72 comporte, dans sa troisième extrémité 30, au moins un perçage excentré 85 qui est destiné à mettre en communication le second alésage 26 avec le milieu extérieur "Me".

Dans le mode de réalisation préféré de l'invention, le bouchon comporte une pluralité de perçages 85 répartis angulairement de manière régulière autour de l'axe du piston 14.

Le piston 14 comporte un bouchon 86 qui ferme le premier alésage 26. Plus particulièrement, le bouchon 86 comporte un tronçon avant qui forme la première extrémité 16 du piston 14 et un tronçon arrière 88 qui forme avantageusement la première douille avant tubulaire 34 dans laquelle est agencé le premier alésage 26.

Cette disposition n'est pas limitative de l'invention et le bouchon pourrait ne former que la première extrémité 16, la première douille avant tubulaire 34 étant alors indépendante.

Avantageusement, la première douille avant tubulaire 34 du bouchon 86 comporte les moyens de filetage 38 déjà évoqués, qui permettent par conséquent de fixer à la fois de fixer la première douille avant tubulaire 34 et la première extrémité 16.

Par ailleurs, la première extrémité 16 du bouchon 86 comporte un perçage 88 qui met en communication la chambre de pression 18 du vérin avec le premier alésage 26 du piston 14 pour permettre l'acheminement de l'air vers le clapet 24.

La première extrémité 16 du bouchon 86 est conformée sensiblement en cloche, et elle est par exemple réalisée lors de la fabrication du bouchon 86 par un procédé d'emboutissage. La première extrémité 16 est réalisée de préférence avec une dimension diamétrale élevée, de manière à former une paroi mobile qui peut être soumise à la pression de l'air dans la chambre de pression 18 suivant une surface suffisamment importante pour provoquer l'avancée du piston 14. On remarquera que, dans ce but, la première extrémité 16 en forme de cloche comporte une collerette annulaire externe 90 qui porte des moyens d'étanchéité du piston 14 dans la chambre de pression 18, notamment un joint avant 92.

Enfin, le premier alésage 26 reçoit un ressort 94 de compression, qui est interposé entre la première extrémité du bouchon 86 et l'élément tubulaire 60 flottant qui comporte le siège mobile 48 du clapet 24, pour former les moyens élastiques de rappel du clapet 24.

Cette configuration n'est pas limitative de l'invention. Le ressort 94, pour former les moyens élastiques de rappel du clapet 24, pourrait être interposé entre n'importe quel points du bouchon 86 et du siège mobile 48, sans changer la nature de l'invention. Par exemple, le ressort 94 pourrait être monté en appui sur une rondelle reçue dans une gorge de la première douille 34.

Il sera par ailleurs compris que la raideur du ressort 94 détermine le tarage du clapet 24, c'est à dire la valeur d'effort correspondant à la valeur déterminée de limite d'un effort de réaction du servomoteur s'exerçant sur la tige du servomoteur qui provoque l'ouverture du clapet 24 pour réguler la pression dans la chambre de pression 24.

Il sera aussi compris que, du fait du montage du ressort 94 dans le bouchon 72, il est aisé de démonter le bouchon 86 pour remplacer le ressort 94 par un ressort de tarage différent associé à une autre valeur d'effort de réaction. Il est donc possible de bénéficier ainsi d'un vérin de test capable de proposer autant de valeurs différentes de l'effort d'actionnement qu'il existe de raideurs différentes possibles pour le ressort 94.

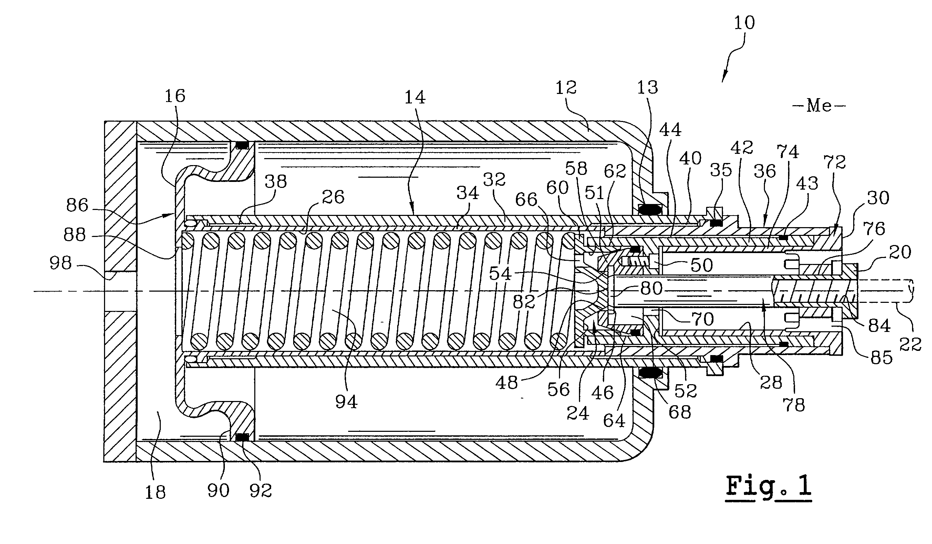

Dans cette configuration, le vérin 10 est mobile entre plusieurs positions, représentées aux figures 1 à 3.

Dans une position de repos, la chambre de pression 18 n'étant pas alimentée, le piston 14 est au repos dans le corps 12 du vérin.

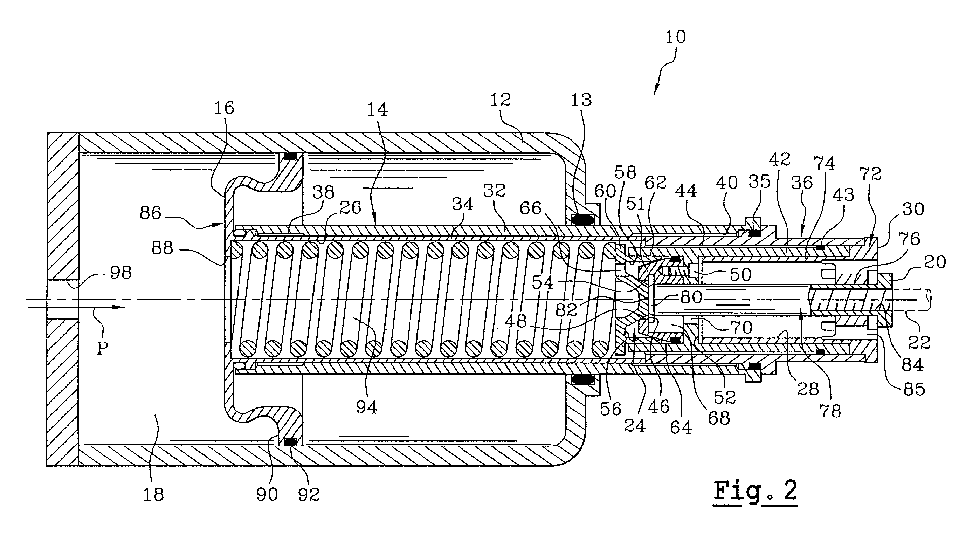

Dans une position d'actionnement, lorsqu'une pression "P" est introduite dans la chambre de pression 18 par l'intermédiaire d'un perçage 98 de fond du corps 12, le piston 14 avance d'avant en arrière et sollicite la tige 22 d'actionnement du servomoteur, comme représenté à la figure 2.

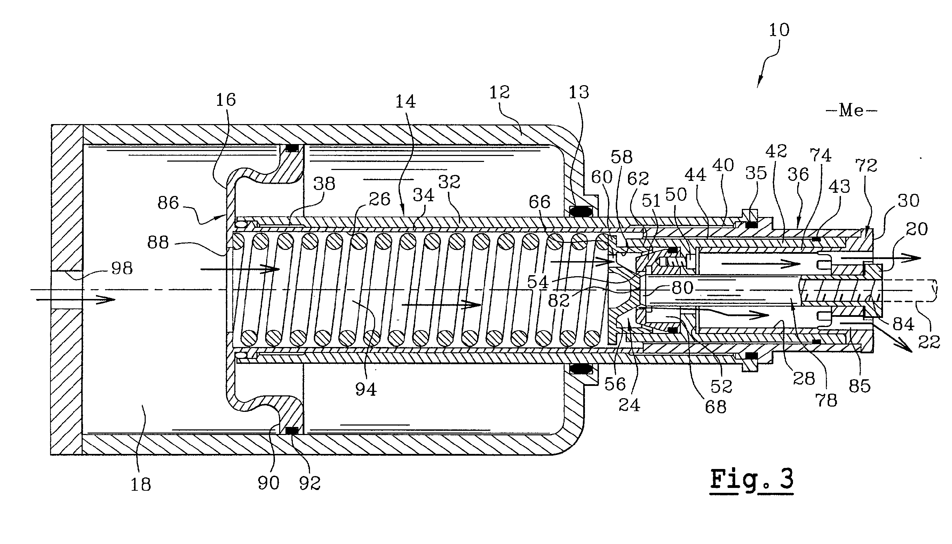

Au delà d'une certaine valeur de l'effort de réaction qui s'exerce sur la tige 22 d'actionnement du servomoteur, celle-ci repousse d'arrière en avant le poussoir 78, ce qui provoque l'ouverture momentanée du clapet 24, son siège mobile 48 quittant le siège fixe 46. L'air chemine alors successivement, comme l'indiquent les flèches de la figure 3, par la cavité formée par l'alésage 58 de l'élément flottant 60, puis par la rainure 70, puis dans le second alésage 28, pour finalement s'échapper dans le milieu extérieur "Me" en passant par les perçages 85.

La pression dans la chambre de pression 18 décroît aussitôt, ce qui a pour effet de relâcher imperceptiblement l'effort exercé sur la tige de commande 22 et donc de diminuer la valeur de l'effort de réaction qui transite par la tige d'actionnement 22. De ce fait, le poussoir 78 relâche le clapet 24 qui se ferme à nouveau.

La pression dans la chambre de pression 18, et par suite l'effort exercé sur la tige d'actionnement 22, sont donc régulés de manière constante par une succession d'ouvertures très brèves du clapet 24.

L'invention propose donc un vérin de test à simple effet permettant de tester un servomoteur suivant un effort régulé, et ce, à moindre coût.

## Revendications

1. Vérin (10) pneumatique pour le test d'un servomoteur d'assistance de freinage de véhicule automobile, du type qui comporte un corps (12) sensiblement axial à l'intérieur duquel est monté coulissant un piston (14), du type dans lequel une première extrémité (16) du piston (14) délimite dans le corps (12) une chambre (18) de pression soumise à une pression (P) d'air déterminée, et du type dans lequel une deuxième extrémité (20) opposée du piston est liée à une tige (22) d'actionnement du servomoteur à tester,
**caractérisé en ce que** le vérin (10) comporte un clapet (24) pneumatique, commandé par la tige (22) d'actionnement du servomoteur, qui est susceptible, au delà d'une valeur déterminée de limite d'un effort de réaction du servomoteur s'exerçant sur la tige (22) du servomoteur, de mettre en communication la chambre (18) de pression du vérin (10) avec le milieu extérieur (Me), pour réguler l'effort exercé par le piston (14) sur la tige (22) d'actionnement du servomoteur suivant une valeur constante.

2. Vérin (10) pneumatique selon la revendication précédente, **caractérisé en ce que** le clapet (24) est intégré au piston (14).

3. Vérin (10) pneumatique selon la revendication précédente, **caractérisé en ce qu'**un premier alésage (26) du piston (14) débouche dans sa première extrémité (16), **en ce qu'**un second alésage (28) du piston (14) débouche dans une troisième extrémité (30) du piston (14) qui fait saillie hors du vérin (10) dans le milieu extérieur (Me), et **en ce que** le clapet (24) est interposé entre les premier et second alésages (26, 28).

4. Vérin (10) pneumatique selon la revendication précédente, **caractérisé en ce que** le clapet (24) comporte au moins un siège fixe (46) et un siège mobile (48), qui est susceptible d'être sollicité par la deuxième extrémité (20) du piston (14) et qui est rappelé élastiquement contre le siège par l'intermédiaire de moyens élastiques (94) tarés selon la valeur déterminée de l'effort de réaction du servomoteur.

5. Vérin (10) pneumatique selon la revendication précédente, **caractérisé en ce que** les premier (26) et second alésages (28), le clapet (24), et les extrémités (16, 20, 30) du piston (14)sont coaxiaux.

6. Vérin (10) pneumatique selon la revendication précédente, **caractérisé en ce que** le piston (14) comporte un corps (32) tubulaire qui reçoit :
- une douille tubulaire (34), qui comporte le premier alésage (26),
- un élément (42) tubulaire intermédiaire, qui comporte le clapet (24), le second alésage (28) et les deuxième et troisième extrémités (20, 30).

7. Vérin (10) pneumatique selon la revendication précédente, **caractérisé en ce que** le siège (46) fixe du clapet (24) est porté par l'élément (42) tubulaire intermédiaire et **en ce qu'**il est tourné vers le premier alésage (26).

8. Vérin (10) pneumatique selon l'une des revendications 6 ou 7, **caractérisé en ce que** le second alésage (28), agencé dans l'élément (42) tubulaire intermédiaire, est fermé par un bouchon (72) comportant le troisième extrémité (30) du piston (14).

9. Vérin (10) pneumatique selon la revendication précédente, **caractérisé en ce que** le bouchon (72) comportant la troisième extrémité (30) du piston (14) comporte au moins un perçage (76) axial destiné à guider en coulissement un poussoir (78) d'actionnement du siège (48) mobile dont l'extrémité libre, qui traverse le bouchon (72), forme la deuxième extrémité (20) du piston (14).

10. Vérin (10) pneumatique selon l'une des revendications 8 ou 9, **caractérisé en ce que** le bouchon (72) comportant la troisième extrémité (30) du piston (14) comporte au moins un perçage (85) excentré destiné à mettre en communication le second alésage (28) avec le milieu extérieur (Me).

11. Vérin (10) pneumatique selon l'une des revendications 3 à 10, **caractérisé en ce que** le premier alésage (26) du piston (14) est fermé par un bouchon (86) comportant la première extrémité (16) dont un perçage (88) met en communication le premier alésage (26) avec la chambre (18) de pression et dont une collerette (90) annulaire externe porte des moyens (92) d'étanchéité du piston (14) dans la chambre (18) de pression.

12. Vérin (10) pneumatique selon la revendication précédente prise en combinaison avec la revendication 7, **caractérisé en ce que** le premier alésage (26) reçoit un ressort (94) de compression, qui est interposé entre le bouchon (86) comportant la première extrémité (16) et le siège (48) mobile du clapet (24), pour former les moyens élastiques de rappel du clapet (24).
